# EUROPÄISCHE PATENTSCHRIFT

(11) **EP 0 939 741 B1**
(45) Veröffentlichungstag und Bekanntmachung des Hinweises auf die Patenterteilung: **28.06.2000**
(21) Anmeldenummer: 98952504.3
(22) Anmeldetag: 19.08.1998
(51) Int. Cl.: B66F 1/00

(54) **WEGFAHRHILFE ZUR AUFNAHME VON DEFEKTEN RÄDERN, INSBESONDERE FÜR DEFEKTE KRAFTFAHRZEUGRÄDER**
AUXILIARY DRIVE SYSTEM TO RECEIVE DEFECTIVE WHEELS, ESPECIALLY DEFECTIVE AUTOMOBILE WHEELS
DISPOSITIF AUXILIAIRE PERMETTANT L'EVACUATION D'UN VEHICULE, DESTINE A RECEVOIR UNE ROUE DEFECTUEUSE, EN PARTICULIER UNE ROUE DEFECTUEUSE D'UN VEHICULE A MOTEUR

(30) Priorität: 20.08.1997 DE 29714890 U; 16.01.1998 DE 29800668 U
(43) Veröffentlichungstag der Anmeldung: 08.09.1999
(73) Patentinhaber: Hönig, Heinz, 6005 Luzern (CH)
(72) Erfinder: Krüger, Cornelia, 17111 Wotenick (DE)
(74) Vertreter: Omsels, Hermann-Josef
(86) Internationale Anmeldenummer: DE9802424
(87) Internationale Veröffentlichungsnummer: WO9919246

(56) Entgegenhaltungen:
- EP-A- 0 334 456
- FR-A- 2 516 022
- FR-A- 2 676 684
- GB-A- 669 560

## Beschreibung

Die Wegfahrhilfe dient als Pannenhilfe für ein infolge eines Reifenschaden liegengebliebenes Kraftfahrzeug. Der Fahrer kann durch einfaches Auffahren seines Kraftfahrzeuges auf die Vorrichtung durch eigene Motorkraft die nächstliegende Reparaturmöglichkeit mit einer Geschwindigkeit von bis zu 30 km/h erreichen. Der Vorteil der Wegfahreinrichtung liegt darin, daß der Fahrer ohne einen mühsamen Radwechsel oder eine komplizierte Reifenreparatur in einer unter Umständen gefährlichen Situation, man denke beispielsweise an eine Reifenpanne bei Nacht auf einer kurvenreichen Landstraße ohne Seitenstreifen, in die nächst gelegene Service-Werkstatt aus eigener Kraft fahren kann. Zudem ergibt sich eine Gewichtseinsparung, da die Wegfahrhilfe erheblich leichter als ein vollwertiges Ersatzrad mit Felge ist. Weiterhin nimmt die Wegfahrhilfe weniger Raum als eine Reserverad ein, so daß zusätzlicher Stauraum entsteht.

Eine derartige Wegfahrhilfe ist beispielsweise aus der FR-PS 2 516 022 bekannt. Die Vorrichtung besteht aus einem Rohrrahmen, an dem drei Räder befestigt sind. Das vordere Rad ist um 360 Grad schwenkbar angeordnet. Am Fahrgestell ist eine Wanne zur Aufnahme und seitlichen Fixierung des defekten Rades vorgesehen. Die hintere, durchgehende Achse dient gleichzeitig zur exzentrischen Lagerung eines Rampenbleches. Das Rampenblech besteht aus U-förmig gekantetem Blech, wobei die Höhe der Wangen über die Länge hin abnimmt, um das Auffahren des Rades im abgeklappten Zustand zu erleichtern. Im vorderen Bereich des Fahrgestells ist ein halbkreisförmiger Rohrbügel angeordnet, der über ein Gestänge hoch geklappt wird, wenn das Rampenblech in die Fahrstellung kippt. Hierdurch soll verhindert werden, daß das defekte Rad die Wegfahrhilfe überrollt. Das Rampenblech liegt in der abgeklappten Stellung mit beiden Wangen auf dem Untergrund auf, wenn das defekte Fahrzeugrad auf die Wegfahrhilfe auffährt, so daß die Wegfahrhilfe gegen Verrutschen gesichert ist. Der entscheidende Nachteil dieser Ausführungsform liegt darin, daß am Ende des Rampenbleches ein Absatz entsteht, den das defekte Rad überrollen muß. Dies kann insbesondere auf glatten Untergründen zu einem Verrutschen der Wegfahrhilfe führen, zumal die Haftkräfte zwischen Stahl und mineralischen Oberflächen nicht sehr hoch sind. Die erfindungsgemäße Wegfahrhilfe vermeidet diesen Nachteil durch die Verwendung eines Bleches als Auffahrwippe unter gleichzeitiger Abbremsung der Wegfahrhilfe Weiterhin rollt bei der FR-PS 2 516 022 das Rad über einen Bügel aus Rundeisen in die Wanne ab, der nur ein geringes Biegemoment aufweist, so daß beim Gebrauch der Vorrichtung Deformationen zu erwarten sind.

Eine weitere Ausführungsform einer Wegfahrhilfe ist in DE 41 16 480 A1 offenbart. Die Vorrichtung besteht im wesentlichen aus einer Wanne zur Aufnahme und seitlichen Fixierung des defekten Rades, an der vier Räder befestigt sind. Der Boden der Wanne ist W-förmig. entsprechend dem Querschnitt einer Fahrzeugfelge ausgebildet. Keines der Räder ist um die Hochachse schwenkbar. Im vorderen Ende der Wanne ist ein nasenförmiger Anschlagkörper angeordnet. Weiterhin ist ein Spannband nebst manueller Spannvorrichtung am vorderen Ende der Wanne und im hinteren Bereich des Rampenbleches befestigt. Die nach dieser Patentschrift vorgeschlagene Lösung versucht, die Gefahr des Verrutschens der Wegfahrfahrhilfe beim Auffahren mit dem defekten Kraftfahrzeugrad dadurch zu umgehen, daß ein ebenes, nicht gekantetes Rampenblech verwendet wird. Beim Abklappen des Rampenbleches in Auffahrstellung entsteht daher nur ein sehr kleiner Absatz zum Untergrund. Zusätzlich werden die auffahrseitigen Räder mittels zweier Bremsklötze beim Auffahren blockiert. Nach dem Auffahren wird das defekte Rad durch das Spannband, welches die Lauffläche des Reifens mittig umfaßt, und mittels einer Spannvorrichtung, die von Hand angezogen wird, fest in die Wanne und gegen den vorderen nasenförmigen Anschlagkörper gepreßt. Gleichzeitig wird die Auffahrrampe von hinten an das Rad gepreßt Hierdurch soll eine kraft schlüssige Verbindung zwischen der Wegfahrhilfe und dem defekten Rad hergestellt werden, um das Überfahren von kleineren Hindernissen wie etwa Bordsteinkanten sowie das Rückwärtsfahren mit der Wegfahrhilfe zu ermöglichen Die kraftschlüssige Verbindung ermöglicht schließlich auch den Einsatz der Wegfahrhilfe für frontgetriebene Fahrzeuge. Der Nachteil dieser Ausführungsform liegt jedoch darin, daß der Reifen nach dem Anziehen des Spannbandes sehr stark deformiert wird. So preßt sich der vordere nasenförmige Anschlagkörper weit, das heißt fast bis auf den Felgengrund, in das Rad hinein. Weiterhin ergibt sich durch den W-förmig ausgebildeten Wannenboden zwar eine gute kraftschlüssige Verbindung zwischen dem Rad und der Wegfahrhilfe, doch wird hierdurch die Lauffläche des Reifens ebenfalls erheblich deformiert. Bei heutigen Reifen, die hohen Belastungen ausgesetzt sind, können derartige Verformungen der Reifenkarkasse zu einer Verringerung der Lebensdauer führen. Darüber hinaus wird die Handhabung der Vorrichtung durch eine von Hand anzuziehende Spannvorrichtung unnötig erschwert.

Für den Fall, daß die derartig mit dem defekten Rad verbundene Wegfahrhilfe gegen ein Hindernis stößt, ist zu befürchten, daß sich das Rad zusammen mit der Wegfahrhilfe in den Radkasten zurückdreht und daher völlig blockiert, wodurch erhebliche Schäden an Insassen und Fahrzeug entstehen können. Ferner ist die Lenkbarkeit der Vorrichtung durch die vier starr gelagerten Räder stark eingeschränkt. Schließlich senkt sich die Vorrichtung beim Auffahren hinten ab, so daß sie vorne hochkippt. Bei Personenkraftwagen mit geringer Bodenfreiheit kann die Vorrichtung daher beim Auffahren unter die vorderen Längsträger stoßen.

Ein weiterer Nachteil der in DE 41 16 480 A1 offenbarten Vorrichtung liegt schließlich in der aufwendigen Bremskonstruktion, um ein Verschieben beim Auffahren zu vermeiden. Die erfindungsgemaße Vorrichtung vermeidet diesen Nachteil durch einen konstruktiv einfachen und daher günstig zu fertigenden Exzenterbremshebel. Schließlich ist in der nach der Patentschrift DE 41 16 480 A1 ausgeführten Vorrichtung die Auflast gleichmäßig auf alle vier Laufrollen verteilt. In der erfindungsgemäßen Ausführung ist der Schwerpunkt nach hinten verlagert, so daß ein Überfahren von Hindernissen auf dem Untergrund erleichtert wird.

Die Nachteile der vorbekannten Vorrichtungen vermeidet die erfindungseemaße Ausführung der Wegfahrhilfe.

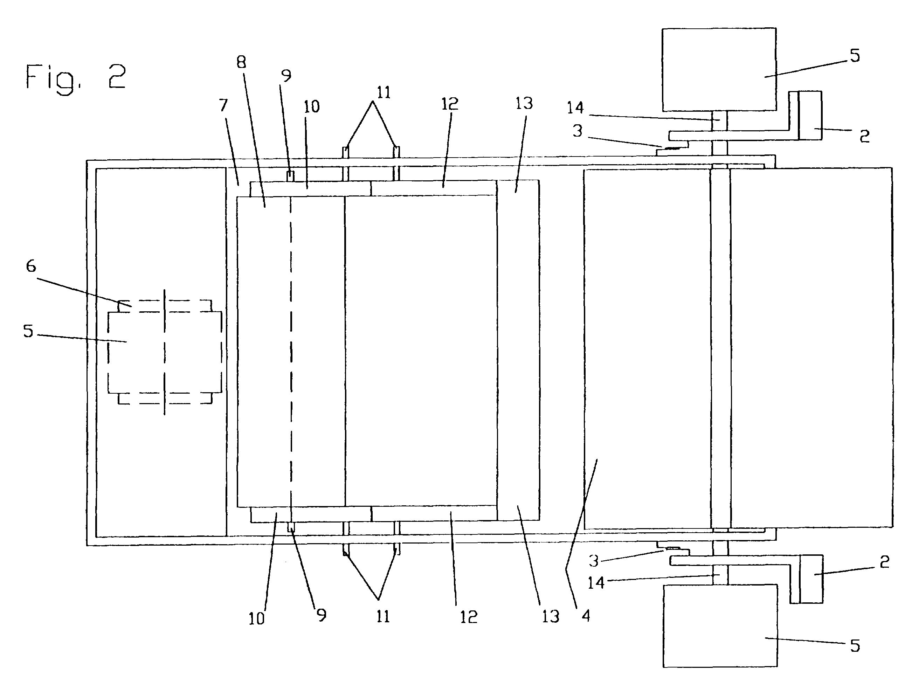

Die erfindungsgemaße Vorrichtung soll anhand eines Ausführungsbeispiels erläutert werden. Die Fig. 1 zeigt die erfindungsgemäße Vorrichtung in der Seitenansicht mit ausgeklappter Wippe zum Auffahren des Rades, Fig. 2 zeigt die erfindungsgemäße Vorrichtung in der Draufsicht, Fig. 3 und 4 zeigen den automatisch ausklappenden Überrollschutz in der Grund- und Betriebsstellung, die Fig. 5 und 6 zeigen die erfindungsgemäße Vorrichtung mit angezogener bzw. gelöster Bremsvorrichtung.

Die erfindungsgemäße Vorrichtung besteht aus einer Wanne 1 zur Aufnahme des defekten Rades und steht auf dem Untergrund 15. An der Wanne 1 sind die Laufrollen 5 befestigt, wobei zwei am Ende der Wanne 1 und eine am vorderen Ende angeordnet sind. Die vordere Laufrolle 5 ist um ihre Hochachse schwenkbar in dem Lagerbock 6 gelagert, so daß ein leichtes Einlenken gewährleistet ist. Die Wanne 1 ist nach vorne durch ein Blech 7 abgeschlossen. Den vorderen Anschlag für das Rad bildet die drehbare Rolle 8, die über zwei Bleche 10 zur Lagerung der Rolle 8 gehalten wird. Die Welle 9 dient zur Lagerung der Rolle 8 und zugleich zur verwindungssteifen Verbindung der Haltebleche 10. Die beiden Wippen 12 dienen zum Hochklappen der Rolle 8 und der Haltebleche 10. Sowohl die Wippen 12 als auch die Haltebleche 10 sind drehbar mit der Wanne 1 über die Nieten 11 verbunden. Die Wippen 12 sind durch den Quersteg 13 verbunden, der zur Verstärkung der Halterung sowie als Hebeldruckpunkt für das defekte Rad beim Auffahren dient. Die hinteren Laufrollen 5 sind über eine Welle 14 gelagert. Die Welle 14 ist mit der Wanne 1 verbunden. Über der Welle 14 liegt die Auffahrwippe 4 zum Auffahren des defekten Rades auf die erfindungsgemäße Wegfahrvorrichtung. Beide Exzenterbremshebel 2 sind exzentrisch mit Spiel auf der Auffahrwelle 14 gelagert und werden durch eine Feder 3 unter Spannung gehalten, so daß sie jeweils nur eine von zwei möglichen Positionen stabil einnehmen können.

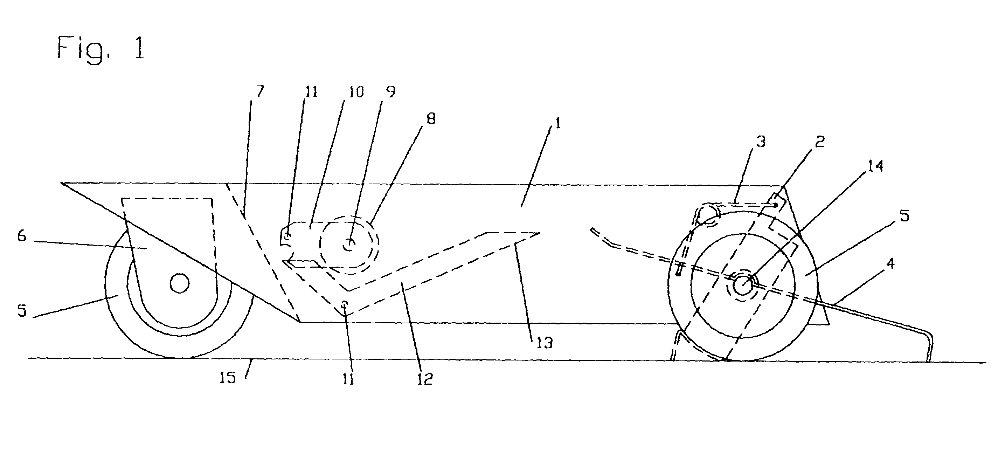

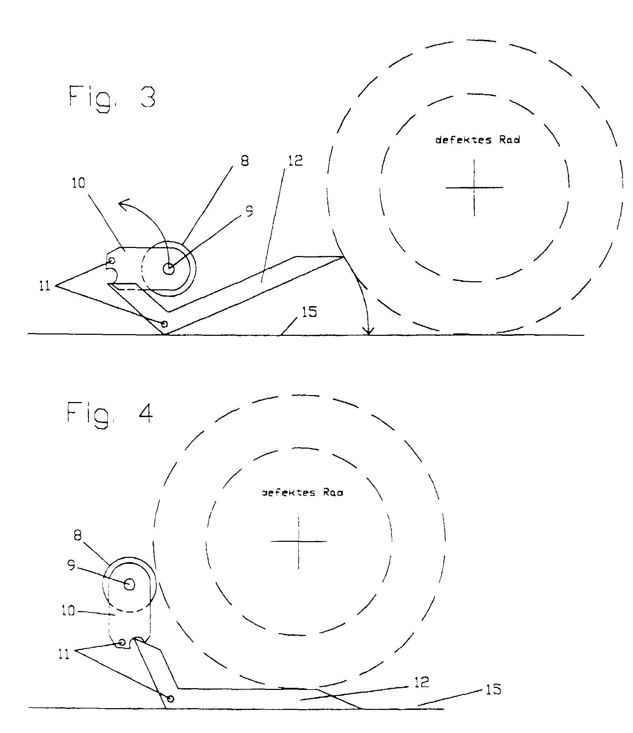

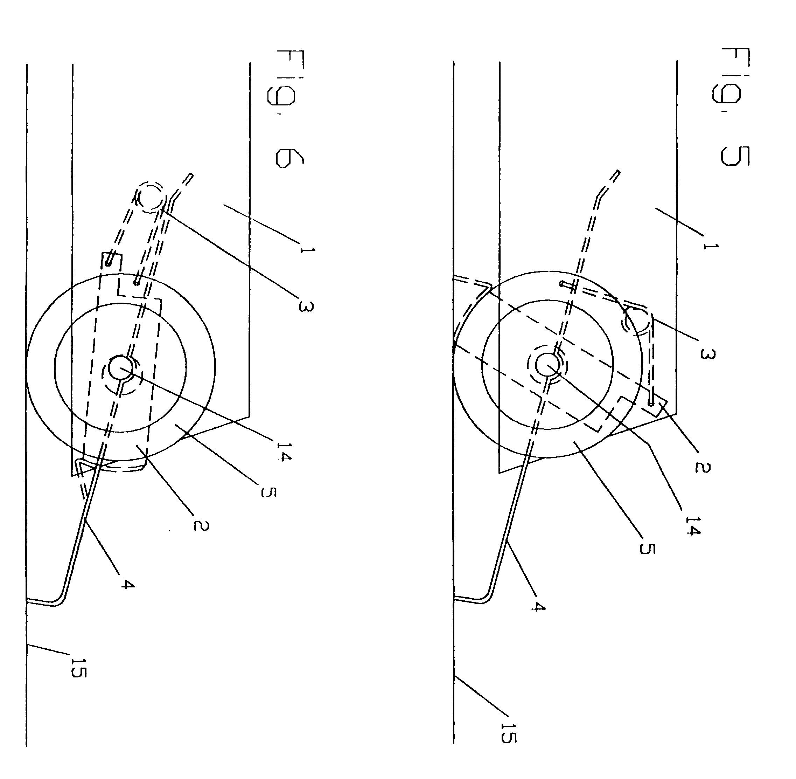

Die Fig. 1 zeigt die erfindungsgemäße Vorrichtung in der Grundstellung zum Auffahren des defekten Rades. Die Auffahrwippe 4, die Wippe 12 zum Hochklappen der Rolle 8 sowie die beiden Exzenterbremshebel 2 sind von Hand in die gezeigten Positionen zu schwenken. Das defekte Rad läuft von hinten über die Auffahrwippe 4 in die Wanne 1, wodurch die Auffahrwippe 4 umklappt und das defekte Rad nach hinten gegen Zurückrollen sichert. Gleichzeitig läuft das defekte Rad. wie in den Fig. 3 und 4 gezeigt auf die Wippe 12 zum Hochklappen der Rolle 8, wodurch ein Überfahren der erfindungsgemäßen Vorrichtung sicher verhindern wird.

Parallel zu diesen Vorgängen wird die Wanne 1 durch das Auffahren des defekten Rades ein kleines Stück nach vorne geschoben, so daß sich die beiden Exzenterbremshebel 2 wie in Fig. 5 und Fig. 6 dargestellt vom Untergrund lösen, in dem sie sich automatisch nach hinten wegdrehen und so ein Wegfahren mit der erfindungsgemäßen Vorrichtung ermöglichen.

Die Fig. 5 zeigt die Brems- und Auffahrstellung der erfindungsgemäßen Vorrichtung, in der Fig. 6 ist die Wegfahrstellung mit gelösten Exzenterbremshebeln 2 dargestellt. Durch die Federn 3 können die Exzenterbremshebel 2 nur die zwei in Fig. 5 und Fig. 6 dargestellten stabilen Positionen einnehmen. Aufgrund der exzentrischen Lagerung der beiden Exzenterbremshebel 2 können die Exzenterbremshebel 2, wie in Fig. 6 gezeigt, radial in Bezug auf die Symmetriemitte der Welle 14 herausschwenken, so daß die Exzenterbremshebel vom Untergrund 15 unter gleichzeitiger Freigabe der Laufflächen der Laufrollen 5 abgehoben werden. Die Bremswirkung ist damit aufgehoben. Das Hochklappen der Exzenterbremshebel geschieht automatisch beim Auffahren auf die erfindungsgemäße Vorrrichtung, ohne weiteres Zutun des Benutzers.

In der in Fig. 5 gezeigten Brems- und Auffahrstellung liegen die Exzenterbremsen 2 sowohl an den beiden Laufrollen 5 als auch auf dem Untergrund 15 auf, so daß eine sichere Bremswirkung beim Auffahren gewährleistet ist. Die Bremskraft wird noch durch die Auflast beim Auffahren erhöht. Die Wirkung der Exzenterbremshebel 2 ist in der in Fig. 5 dargestellten Position mit der Wirkung eines konventionellen Bremsklotzes für Kraftfahrzeugreifen zu vergleichen.

Erst wenn das defekte Rad gegen die Rolle 8 läuft, kippt der hintere Teil der Wanne 1 ein wenig in vertikaler Richtung an, so daß die Exzenterbremshebel 2 kurz entlastet werden und durch die Federn 3 automatisch nach hinten, in die in Fig. 6 dargestellte Wegfahrstellung gedrückt werden. Die Exzenterbremshebel 2 können sich aufgrund ihrer exzentrischen Lagerung auf der Welle 14 in radialer Richtung bewegen. Hierdurch drücken die Federn 3 die Exzenterbremshebel 2 von den Laufflächen der Laufrollen 5 weg, schwenken sie in eine nahezu waagerechte Position, so daß die Bremswirkung der Exzenterbremshebel 2 aufgehoben wird.

### Bezugszeichen

- 1: Wanne zur Aufnahme des Rades
- 2: Exzenterbremshebel
- 3: Spiralfeder
- 4: Auffahrwippe zum Sichern des Rades
- 5: Laufrolle
- 6: drehbarer Lagerbock für vordere Laufrolle
- 7: Abschlußblech
- 8: Rolle
- 9: Welle
- 10: Halteblech zur Lagerung der Rolle
- 11: Nieten
- 12: Wippe zum Hochklappen der Rolle
- 13: Quersteg
- 14: Welle zur Lagerung der hinteren Laufrollen
- 15: Untergrund

## Patentansprüche

1. Wegfahrhilfe, insbesondere zur Aufnahme von defekten Kraftfahrzeugrädern, bestehend aus einer Wanne 1 zur Aufnahme des defekten Rades sowie einer rückseitig angebrachten Auffahrwippe 4 zum Auffahren des defekten Rades und dem nachfolgenden rückwärtigen Sichern des Rades **dadurch gekennzeichnet,**
daß beim Auffahren des defekten Rades eine im vorderen Bereich der Vorrichtung an zwei Halteblechen 10 über eine Welle 9 drehbar gelagerte Rolle 8 hochschwenkt indem das defekte Rad die durch einen Quersteg 13 verbundenen Wippen 12 beim Auffahren nach unten drückt und diese mit ihren nasenförmigen Enden in die entsprechenden Aussparungen der Haltebleche 10 eingreifen und hierdurch das Überfahren der Vorrichtung verhindert wird und gleichzeitig die, zusammen mit den hinteren Laufrollen 5 auf einer Welle 14 gelagerten, beiderseitig wirkenden, exzentrisch gelagerten Bremshebel 2, die ein Verrutschen der Vorrichtung beim Auffahren verhindern, ohne weiteres Tätigwerden des Benutzers gelöst und durch zwei Federn 3 in die Wegfahrstellung hochgeschwenkt werden.

## Claims

1. An auxiliary drive system, especially for receiving defective automobile wheels, consisting of a trough 1 for receiving the defective wheel, and a pivoting ramp 4 mounted at the rear to take the defective wheel, and the subsequent securing of the wheel from the rear, characterised by the fact that, when the defective wheel is being driven onto the device, the roller 8 in the front which is mounted on two retaining plates 10, and which can rotate on a shaft 9, is raised, as a result of the action of the ramp 12. This ramp 12 is connected by a crosspiece 13, and the ramp is forced down when the defective wheel is driven onto it. This ramp ends in projections, which engage in the corresponding recesses of the retaining plates 10, thereby preventing the wheel from overrunning the device. Simultaneously the eccentrically mounted brake levers 2, which act on both sides, and are mounted together with the rear rollers 5 on a shaft 14, to prevent the device from sliding when the wheel is being driven on. These levers are activated without requiring any further action by the operator, and are raised into the withdrawal position by means of two springs 3.

## Revendications

1. Dispositif auxiliaire permettant l'évacuation d'un véhicule, destiné en particulier à recevoir les roues défectueuses de véhicules à moteur, composé d'une caisse 1 servant à recevoir la roue défectueuse et d'une rampe basculante 4 située à l'arrière, destinée à faire monter la roue défectueuse et à l'empêcher de reculer, caractérisé par
la levée, lors de l'arrivés de la roue défectueuse dans la caisse, d'un cylindre 8 mobile monté à l'avant du dispositif sur deux supports métalliques 10 au moyen d'un arbre 9, la roue défectueuse abaissant lors de son arrivée les bras mobiles 12 relies par une traverse 13, les extrémités en forme de nez des bras s'emboîtant dans les évidements correspondants des supports métalliques 10, ce qui empêche le franchissement du dispositif et les deux leviers de frein 2 à excentrique montés avec les deux roues de derrière 5 sur un arbre 14, qui agissant des deux cotés et qui empêchent le dispositif de glisser lors de l'arrivée dans la caisse de la roue défectueuse, étant débloqués simultanément sans autre intervention de l'utilisateur et mis en position haute de roulement par deux ressorts 3.
